# DEMANDE DE BREVET EUROPEEN

(11) **EP 0 694 772 A1**
(43) Date de publication de la demande: **31.01.1996**
(21) Numéro de dépôt: 95460028.4
(22) Date de dépôt: 25.07.1995
(51) Int. Cl.: G01L 5/24, F16B 31/02

(54) **Eléments de boulonnerie équipés d'un dispositif de réglage initial et de surveillance à posteriori de l'allongement**

(30) Priorité: 26.07.1994 FR 9409504
(71) Demandeur: SMEP (S.A.), F-93000 Bobigny (FR)
(72) Inventeur: Consigny, Denis, F-95590 Nointel (FR); Lejour, Olivier, F-77400 Lagny sur Marne (FR)
(74) Mandataire: Vidon, Patrice

(57) **Abrégé**

L'invention concerne un dispositif de réglage initial et de surveillance de l'allongement conféré à un élément de fixation fileté (1) du fait du serrage auquel est soumis cet élément fileté, dispositif notamment destiné à équiper les composants de boulonnerie de sécurité standardisés munis d'un perçage cylindrique axial (2) destiné à recevoir une canne chauffante.

Le domaine d'application potentiel recouvre l'ensemble de la mécanique et des installations industrielles.

Les dispositifs selon l'invention sont notamment caractérisés en ce qu'ils comportent une cavité partiellement délimitée par le perçage axial (2) dont l'une au moins des dimensions varie en fonction des allongements subits par l'élément (1), la dite cavité étant totalement remplie par un fluide incompressible et en ce qu'ils comportent les moyens (6) de mesurer les variations de pression auxquelles est soumis ce fluide. La cavité sera avantageusement partiellement remplie par une tige (10) qui pourra être une résistance électrique.

## Description

L'invention concerne les éléments de fixation munis d'au moins un filetage mâle. Elle peut s'appliquer à tous les assemblages par éléments filetés comme les systèmes de fixation par vis et écrous ou par vis et trou taraudé ou encore par goujon et écrous. L'invention s'applique plus particulièrement à la boulonnerie dite de sécurité, c'est à dire aux assemblages par éléments filetés dans lesquels la pression conférée par le ou les éléments filetés aux pièces assemblées doit être comprise entre deux valeurs précisément définies. En conséquence, l'invention trouvera naturellement ses applications dans les domaines industriels dans lesquels une éventuelle défaillance d'un assemblage par élément fileté pourrait avoir des conséquences dommageables pour les machines, les hommes ou l'environnement. On citera à titre d'exemples non limitatifs de champs d'application préférentiels de l'invention: l'industrie nucléaire, l'industrie chimique, la thermique, et les industries des transports en général (automobile, aéronautique, ferroviaire).

On sait que la conséquence du serrage d'un élément fileté est de conférer à la pièce de fixation (vis, boulon ou goujon) des contraintes de traction. Ces contraintes se traduisent par un allongement de la dite pièce. Quels que soient la nature et le nombre des pièces assemblées, les contraintes de traction ont pour conséquence l'allongement de la pièce filetée. Pour que l'assemblage fonctionne de façon satisfaisante, il convient que l'allongement conféré à la pièce filetée soit compris entre deux valeurs limites. On recherche souvent un allongement proche de 75 % de la limite élastique de la pièce filetée, avec une tolérance de plus ou moins 10 %. Ce qui donne une valeur minimale de 67,5 % et une valeur maximale de 82,5 % de la limite élastique de la pièce. Bien entendu, en fonction des assemblages et des applications, on pourra trouver des valeurs limites différentes, mais il n'en reste pas moins qu'un assemblage ne sera réellement fiable que si et seulement si l'allongement de la ou des pièces filetées est compris entre une limite basse et une limite haute: en deça de la limite basse, le serrage des pièces sera insuffisant, entraînant des risques de fuites dans le cas d'un assemblage comportant des joints et des risques de désolidarisation dans tous les cas; au delà de la limite haute, la pièce filetée risquera de dépasser sa limite élastique et de subir des déformations permanentes, si bien qu'elle deviendra impropre à sa fonction.
Il importe de remarquer que cette condition d'allongement strictement compris entre deux valeurs limites doit être respectée non seulement au moment où l'opérateur réalise l'assemblage mais encore pendant toute la durée de service du dit assemblage. Cette durée de service peut s'étendre sur plusieurs années. Or il arrive fréquemment que des sollicitations mécaniques (vibrations, chocs, usure de pièces en mouvement...) ou thermiques (dilatations, séchage des joints...) viennent modifier la géométrie de l'assemblage, donc l'allongement des pièces filetées.

Plusieurs solutions ont été proposées pour résoudre ce problème lors du montage initial de l'assemblage: on utilise fréquemment des clés dynamométriques, permettant d'appliquer un couple donné sur la tête des boulons, sur les écrous ou sur les vis. On procède également à des serrages à un angle de rotation donné, mais la précision obtenue dépend de la géométrie des filets et n'est donc pas meilleure que ± 20 %.

En première monte, on a souvent recours à des systèmes de clés à frappe ou de visseurs pneumatiques avec limiteur de couple. On utilise également des dispositifs de serrage hydraulique, qui présentent l'inconvénient d'être relativement encombrants et d'un emploi délicat. Pour la boulonnerie de sécurité, on utilise préférentiellement des vis, boulons ou goujons munis d'un perçage axial débouchant; ce perçage est utilisé pour placer une canne chauffante qui provoque un allongement par dilatation de la pièce de fixation. On amène alors les écrous ou têtes de vis en butée, la rétraction du seul élément fileté obtenue après dépose de la canne chauffante permettant d'obtenir un allongement de la pièce de fixation compris dans les limites recherchées.

Notons que les solutions décrites ci-dessus ne sont appliquées de façon systématique que lors d'un montage en usine et le sont de façon plus aléatoire lors des opérations de maintenance ou de réparation. De plus, le couple de serrage appliqué n'est pas toujours une mesure fiable du résultat recherché, à savoir la tension à laquelle est soumis l'élément fileté de liaison. En effet, des variations d'états de surface des portées, des écrous, des têtes de vis ou des rondelles peuvent induire des variations significatives du paramètre mesuré (le couple de serrage) par rapport au paramètre recherché mais non mesuré en tant que tel (la tension de l'élément de liaison). Il en est de même de la lubrification: on a mesuré un facteur 4, pour un assemblage donné et pour un même couple de serrage, entre les allongements résultants selon la qualité de la lubrification. Enfin on constate que le rendement du système vis écrous est souvent insuffisant pour conférer à l'élément d'assemblage l'allongement recherché, au moins lorsqu'il s'agit d'éléments de diamètre important usinés dans des matériaux particulièrement résistants (titane, aciers spéciaux...) En définitive, seul le serrage par canne chauffante, lorsqu'il est réalisé avec des précautions suffisantes, donne une bonne présomption de respect des valeurs d'allongement.

S'agissant du suivi des assemblages vissés dans le temps, les solutions actuellement proposées sont encore moins satisfaisantes. En premier lieu, il y a l'opérateur de maintenance qui "redonne un tour de clé de temps en temps". Il existe également des systèmes de mesure de l'allongement par ultrasons, systèmes très performants mais d'usage limité, parce qu'onéreux et nécessitant une bonne accessibilité des éléments de visserie.

On trouve dans la littérature de nombreuses propositions pour mesurer l'allongement initial conféré à un boulon, un goujon ou une vis. Certains dispositifs ont également pour fonction de surveiller l'évolution de cet allongement dans le temps. Un tel dispositif est notamment décrit dans le Brevet français N• FR 1.477.006 du 06 Mars 1967 au nom de la Société HALCON INTERNATIONAL. La solution décrite consiste à fixer une pige à l'une des extrémités d'un goujon, ladite pige traversant l'élément de fixation de telle façon qu'elle affleure à l'autre extrémité. Les allongements étant subits par le goujon et non par la pige, on mesure le positionnement relatif de l'extrémité libre et de la pige et d'un repère placé sur le goujon, soit à l'oeil nu soit à l'aide d'un pied à coulisse.

Le mode de lecture des positionnements relatifs de l'extrémité libre de la pige et d'un repère situé sur l'élément de fixation a fait l'objet de plusieurs propositions d'améliorations qui ont donné lieu aux dépôts de demandes de Brevets. On a notamment cherché à améliorer la précision et à faciliter la lecture de la mesure de cette quantité, qui est de l'ordre de quelques dizaines de microns pour un élément de fixation de 100 mm de long en acier ordinaire tendu à 75 % de sa limite élastique. Parmi ces suggestions, on retiendra:
- PCT GB 93 00180 (le 28/01/93 au nom de ROTABOLT) qui propose de livrer des éléments de fixation étalonnés munis d'une pige de longueur connue prévue pour occuper une position précisément définie lorsque la tension est celle recherchée.
- PCT GB 92 00072 (le 06 /08 /92 au nom ROTABOLT) dans lequel le positionnement relatif est mesuré à l'aide d'un système de contacteurs électriques.
- PCT GB 93 00760 (le 08/04/93 au nom de BETABOLT) dans lequel le déplacement relatif pige/goujon est amplifié par la déformation d'un ressort en forme d'épingle à cheveux.
- PCT US 91 06016 (le 05/03/92) au nom de KIBBLEWHITE propose d'inclure un transducteur dans un élément de fixation, le dit transducteur facilitant la mesure des allongements par ultrasons.
- PCT US 90 00331 (le 20/09/90 au nom de POPENOE Charles) propose d'inclure à l'une des extrémités d'un élément de fixation un indicateur opti-mécanique permettant de faciliter la lecture des déplacements relatifs.
- WO 92 08903 (le 29/05/91 au nom de MUM KAM CHONG) propose un organe de boulonnerie laissant échapper un fluide coloré en cas de tension trop importante.
- EP 49 537 (le 14/04/92 au nom de ROTABOLT) propose placer une molette manoeuvrable à la main à l'extrémité de la pige, ladite molette venant en butée sur une face du goujon lorsque l'assemblage est réalisé: la molette sera ou non libre en rotation selon que la tension de l'élément de fixation sera insuffisante ou correcte.

Malgré leur nombre et leur diversité, on constate que les solutions proposées pour conférer un allongement précisément déterminé aux éléments filetés et/ou pour vérifier le maintien dans le temps de cet allongement ne donnent pas satisfaction. Elles font d'ailleurs l'objet d'applications très limitées dans l'industrie, surtout si l'on se réfère au parc de boulons vis et goujons installé chaque année. Les raisons de cette diffusion limitée dans les domaines d'application potentiels résident dans la complexité de réalisation et d'utilisation des solutions proposées. De plus, les systèmes de lecture du différentiel d'allongement restent d'une précision insuffisante pour permettre la distinction entre une valeur d'allongement acceptable et une valeur potentiellement dangereuse. Enfin, le coût de fabrication des différents dispositifs qui ont été proposés disqualifie ces dispositifs dès qu'il s'agit d'envisager leur utilisation à grande échelle (exemples: sur un véhicule automobile actuellement fabriqué, plus de 500 assemblages par éléments filetés justifieraient un contrôle des allongements à la mise en oeuvre et pendant la durée de service; sur une installation pétrochimique industrielle, plus de 100.000 assemblages bénéficieraient profitablement de cette technologie).

Supplémentairement, aucun des dispositifs proposé n'est compatible avec une mise en oeuvre initiale par canne chauffante; or les assemblages qui nécessitent une surveillance précise sont le plus souvent des assemblages dans lesquels les éléments de fixation sont soumis à des contraintes importantes, ce qui implique l'emploi d'acier à haute résistance pour la réalisation des éléments de fixation, donc le serrage de ces éléments par canne chauffante.

Le caractère imparfait et insatisfaisant des dispositifs de mesure et de surveillance d'allongement actuellement proposés est donc particulièrement apparent.

L'invention propose de réaliser des éléments de visseries munis d'un dispositif de contrôle de l'allongement spécifique, particulièrement simples à réaliser industriellement et qui pallient à l'ensemble des inconvénients exposés ci-dessus.

Un objectif principal de l'invention est de proposer un dispositif permettant de s'assurer que l'on confère, au moment de sa mise en oeuvre, un allongement d'une valeur donnée à un élément fileté.

Un objectif essentiel de l'invention et de proposer un appareil qui permette de vérifier que l'allongement d'un élément fileté reste proche d'une valeur fixée ou dans une fourchette de valeurs données durant toute la durée de service de l'assemblage.

Un objectif essentiel de l'invention est de proposer un dispositif de contrôle initial et de surveillance dans le temps de l'allongement d'un élément fileté qui soit compatible avec la mise en oeuvre du dit élément vissé à l'aide d'un dispositif de type canne chauffante.

Un autre objectif de l'invention est de proposer un dispositif de contrôle des allongements d'éléments filetés qui puisse être adapté à des éléments existants, en stock chez les fabricants ou les utilisateurs, voire à des éléments déjà en service, sans imposer de modifications significatives des dits éléments.

Enfin, l'invention prétend proposer un dispositif dont le prix de revient industriel soit particulièrement faible et qui présente des performances inédites en matière de mesure de l'allongement conféré à un élément fileté, que ce soit au moment de la mise en oeuvre du dit élément ou durant toute la durée de vie de l'assemblage: des allongements de quelques microns seront détectés par un dispositif selon l'invention, alors que les systèmes actuellement proposés, et notamment les systèmes de mesure par ultrasons qui sont d'un maniement particulièrement délicat, ne mesurent que des allongements d'au moins 20 microns avec une précision de l'ordre de 20 %.

L'ensemble de ces objectifs, ainsi que d'autres qui apparaîtront par la suite sont atteints à l'aide de vis, de goujons ou de boulons munis d'un dispositif permettant de mesurer et de visualiser les allongements qu'ils subissent. Il importe de préciser que ces allongements sont très faibles par rapport aux dimensions des pièces dans lesquelles ils surviennent: pour une tige filetée d'une longueur utile de 100 mm tendue à 75 % de sa limite élastique, c'est à dire travaillant dans des conditions optimales, l'allongement résultant d'un serrage correct est de l'ordre de 80 microns, ceci de façon pratiquement indépendante du matériau et du diamètre de la pièce. De plus, cet allongement se répartit uniformément dans le matériau, si bien qu'il est très difficile à mesurer. On comprend que le seul procédé relativement fiable actuellement proposé consiste à étalonner la longueur totale des pièces filetées avant serrage et à mesurer, grâce à un dispositif à ultrasons, la longueur de ces mêmes pièces une fois serrées.

Pour résoudre ces difficultés, l'invention propose un dispositif simple permettant de générer un écartement relatif de deux pièces, écartement directement proportionnel à l'allongement total subit par l'élément fileté, d'amplifier cet écartement, de le mesurer, et de le visualiser au niveau de l'une des extrémités de la pièce filetée, ou encore d'émettre un signal indiquant que l'écartement est ou n'est pas compris dans les limites préétablies.

A cet effet, l'invention concerne un élément de fixation fileté du type comportant un perçage cylindrique axial de diamètre faible par rapport au diamètre extérieur dudit élément, caractérisé en ce qu'il comporte:
- au moins une cavité intégralement remplie par un fluide incompressible dont l'une au moins des dimensions varie en fonction de l'allongement dudit élément;
- des moyens de mesure des variations de pression auxquelles est soumis le fluide remplissant la cavité, le dit fluide étant choisi parmi ceux dont les caractéristiques physiques sont telles qu'ils restent à l'état liquide sur une plage supérieure à l'ensemble des couples (température, pression) auxquels ils sont soumis;
- des moyens de prise en compte de la température dudit fluide.

L'élément de fixation fileté selon l'invention comprend donc des moyens de mesure des variations de pression auxquelles sera soumis le fluide remplissant la cavité. Le fluide utilisé sera choisi parmi ceux dont les caractéristiques physiques sont telles qu'ils restent à l'état liquide sur une plage supérieure à l'ensemble des couples (température, pression) auxquels ils sont soumis du fait des conditions de service de l'assemblage.

Le fait de travailler sur l'ensemble des valeurs température et pression caractérisant l'état du fluide incompressible en fonction des conditions de service de l'assemblage permet d'obtenir une surveillance particulièrement fine des assemblages équipés de dispositifs selon l'invention. On choisira des fluides dont les caractéristiques physiques soient telles qu'ils restent à l'état liquide sur une plage largement supérieure à l'ensemble des couples (température, pression) auxquels ils seront soumis du fait des conditions de service de l'assemblage et de la valeur initiale de pression qui sera choisie. Les liquides utilisés dans les circuits de freinage hydrauliques de véhicules conviendront pour la plupart des applications envisagées.

On comprend que l'augmentation de l'une au moins des dimensions de la cavité, augmentation provoquée par l'allongement auquel sera soumis l'élément de fixation du fait du serrage de ce dernier, aura pour conséquence immédiate d'accroître le volume intérieur de la dite cavité et par conséquent de provoquer la diminution de pression du fluide incompressible. Dans ces conditions, il suffira de régler la pression initiale (avant serrage) à une valeur précise (exemple: 10 bars) et de repérer les valeurs de pression compatibles avec les valeurs d'allongement déterminées comme acceptables (exemple: de 8 à 7 bars). Dans l'exemple chiffré ci-dessus, toute pression supérieure à 8 bars trahira un allongement donc un serrage insuffisant et toute pression inférieure à 7 bars témoignera d'un surserrage.

Afin de se prémunir des effets de la dilatation thermique du fluide incompressible, l'invention propose également d'utiliser des moyens permettant de prendre en compte la température dudit fluide.

Selon une première variante de l'invention, lesdits moyens de prise en compte de la température sont constitués par des moyens de mesure de la température du fluide remplissant ladite cavité. Ces moyens de mesure pourront être placés par exemple dans l'un des bouchons obstruant la cavité à volume variable et permettront de corriger la lecture de la pression du fluide. A cette fin, les couples {température + pression} acceptables seront mémorisés et comparés aux valeurs mesurées par un système approprié.

Selon une deuxième variante, les moyens de prise en compte de la température dudit fluide sont constitués par une deuxième cavité dont les dimensions ne varient pas, lesdits moyens de mesure des variations de pression permettant la mesure du différentiel de pression entre les deux cavités. Dans ce cas, les moyens de prise en compte de la température sont donc constitués par une seconde cavité permettant la mesure d'une pression différentielle ne dépendant pas de la température.

Par ailleurs, on notera également que selon une variante intéressante de l'invention, ladite cavité sera au moins partiellement délimitée par les parois d'un perçage cylindrique axial de diamètre faible par rapport au diamètre extérieur de l'élément.

De façon à permettre la mise en place du dispositif à l'intérieur de pièces de boulonneries destinées à être mises en service au moyen de cannes chauffantes, que ce soient des pièces neuves, des pièces en stocks ou des pièces déjà en service, l'invention suggère que la cavité soit au moins en partie délimitée par l'alésage axial débouchant actuellement ménagé dans les pièces de boulonnerie destinées à être mises en tension grâce aux dispositifs de cannes chauffantes.

Dans un mode de réalisation particulièrement simple et économique, la cavité sera constituée par la totalité de l'alésage ménagé pour la mise en place de la canne chauffante: cet alésage sera obstrué par un bouchon à l'une des extrémités de l'élément de fixation, puis il sera intégralement rempli d'un fluide incompressible, le volume étant refermé par un deuxième bouchon placé à l'autre extrémité de l'élément de fixation, le dit deuxième bouchon étant muni d'un système permettant de lire la pression à laquelle se trouve soumis le fluide incompressible contenu dans le volume ainsi délimité. On remarquera que, contrairement à toutes les propositions relevées dans l'état de l'art, le dispositif selon l'invention n'impose aucune précision de cotes particulière: le volume de la cavité peut avoir des valeurs nettement différentes de la valeur nominale, sans que cela ait la moindre conséquence sur la précision du système; en effet, il suffit de remplir intégralement ce volume avec un fluide incompressible et de régler la pression initiale (avant serrage de l'assemblage) à une valeur déterminée, ce réglage s'effectuant par exemple en serrant plus ou moins fortement l'un des deux bouchons obstruant le volume.

Dans une variante avantageuse de l'invention, une partie importante du volume destiné à recevoir le fluide incompressible sera occupée par un élément rigide métallique, ceci de façon à limiter la quantité de fluide contenu dans l'élément de fixation. De façon préférentielle, le volume effectivement occupé par le fluide incompressible sera localisé à proximité immédiate de l'extrémité munie du bouchon équipé du dispositif de mesure de pression, ceci dans le but d'éviter que les variations de température auxquelles sera soumis l'assemblage n'interfèrent avec les variations de pression qui seront mesurées.

Enfin, pour diminuer le volume de fluide incompressible contenu dans la cavité et pour faciliter la réalisation du serrage initial par canne chauffante, on pourra choisir d'occuper la plus grande partie du volume dégagé par le perçage axial pré-existant non pas par une simple tige métallique mais par une résistance électrique ou par un doigt de gant recevant ce type de composant. Dans ces conditions, la résistance électrique d'une puissance adaptée sera alimentée à travers l'un des bouchons, lequel bouchon sera muni d'un connecteur électrique. De façon avantageuse, on prévoira un dispositif d'asservissement de la résistance aux valeurs de température et/ou de pression lues sur les dispositifs de mesure précédemment décrits. On disposera ainsi de toutes les facilités pour effectuer un échauffement précis de l'élément de fixation, pour vérifier que cet échauffement et la rétraction ultérieure ont conféré à l'élément la stricte valeur d'allongement recherché et pour surveiller dans le temps si cet allongement perdure dans des valeurs admissibles, y compris compte tenu des sollicitations thermiques auxquelles est soumis l'assemblage. Dans cette variante, le fluide incompressible contenu dans la cavité pourra servir de fluide de transfert thermique et facilitera la conduction de chaleur depuis la résistance électrique vers l'élément de fixation. En cas de détection d'un défaut de serrage, la restitution de valeurs acceptables pourra être réalisée très rapidement et très précisément sous réserve de disposer d'une source d'énergie électrique ou, à défaut, de moyens de serrage manuels.

Bien entendu les moyens de détection des valeurs de pression ou de température du fluide contenu dans la cavité à volume variable pourront prendre des formes extrêmement variées. On pourra utiliser de simples manomètres ou thermomètres de faible encombrement; on pourra également utiliser des capteurs de pression ou de température plus sophistiqués, du genre modifiant les paramètres d'un signal électrique. Cette dernière disposition permet de déclencher un signal à distance et d'avertir les opérateurs d'une défaillance d'un élément d'assemblage en service. Les vitesses de variation pourront être mesurées et intégrées, ce qui permettra de réaliser une maintenance préventive des assemblages. Les faibles coûts et encombrements des capteurs de pression et/ou de température disponibles sur le marché permettent de réaliser des ensembles complets, adaptables à des pièces neuves ou en service, d'un rapport prix/performances particulièrement probant. De façon avantageuse, le capteur de pression pourra comporter un élément sensible piézo-résistif greffé sur un cristal ou sur une matrice céramique; il sera alimenté soit par une source extérieure soit par une petite batterie (pile) logée dans le bouchon; en cas de dépassement des valeurs limites il mettra en service un système d'alarme soit déporté soit intégré au bouchon.

Lorsque l'on utilisera deux cavités permettant d'annuler les effets de la température comm décrit ci-dessus, lesdits moyens de mesure des variations de pression pourront aussi notament être constitués par un manomètre différentiel relié aux deux cavités ou encore par un capteur de pression différentielle disposé entre lesdites deux cavités. Dans ce cas, ces moyens de mesure pourront aussi inclure un tube externe communiquant entre les deux cavités renfermant une bille susceptible de se déplacer en fonction des variations de pression dudit fluide dans les deux cavités.

D'autres avantages et caractéristiques de l'invention apparaîtront à la lecture suivante de différents modes de réalisation préférentiel de l'invention, donné à simple titre indicatif, et des dessins annexés dans lesquels:
- La figure 1 représente une vue en coupe d'un goujon fileté à ses deux extrémités préparé pour subir une mise en place par canne chauffante, tel qu'actuellement commercialisé pour de nombreuses applications industrielles ;
- la figure 1a représente une vue agrandie de la partie supérieure de la figure 1 ;
- la figure 2 représente une vue en coupe du goujon décrit en figure 1, équipé d'un dispositif de mesure et de surveillance des allongement selon l'invention ;
- la figure 2a représente une vue agrandie de la partie supérieure de la figure 2;
- la figure 3 représente une vue en coupe d'un goujon selon l'invention équipé d'un dispositif de mesure selon l'invention, avec réduction du volume de fluide obtenue grâce à la mise en place d'une résistance électrique asservie servant à la réalisation du serrage initial ;
- la figure 3a représente une vue agrandie de la partie supérieure de la figure 3.
- la figure 4 représente une vue en coupe de la partie supérieure d'un goujon selon l'invention équipé d'un deuxième mode de réalisation des moyens de mesure des variations de pression, incluant une deuxième cavité remplie de fluide incompressible ;
- la figure 5 représente une vue en coupe de la partie supérieure d'un goujon selon l'invention équipé d'un troisième mode de réalisation des moyens de mesure des variations de pression incluant également une deuxième cavité remplie de fluide incompressible ;
- la figure 6 représente une vue en coupe de la partie supérieure d'un goujon selon l'invention équipé d'un quatrième mode de réalisation des moyens de mesure des variations de pression incluant aussi une deuxième cavité remplie de fluide incompressible.

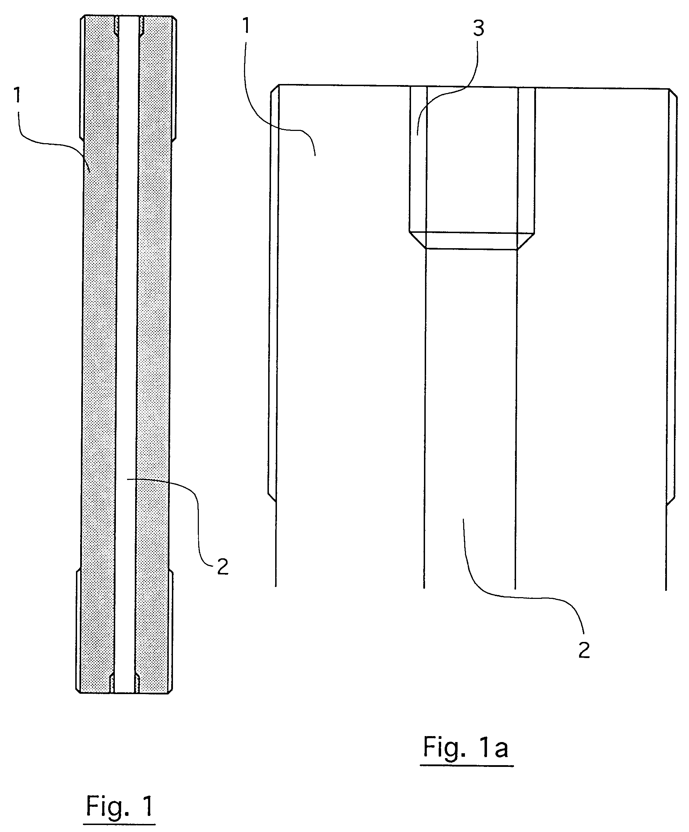

L'élément de fixation représenté figure 1 et figure 1a est un goujon composé d'une tige en acier (1) munie de deux filetages extérieurs à chacune de ses extrémités et transpercé sur toute sa longueur par un perçage cylindrique axial (2) de diamètre faible par rapport au diamètre de la pièce. De façon standard, cet élément de fixation est équipé de filetages intérieurs (3) destinés à recevoir par exemple une canne chauffante amovible utilisée lors de la mise en service. L'élément tel que décrit équipe la plupart des assemblages sensibles actuellement placés en milieu industriels. Le dispositif selon l'invention est conçu pour s'adapter sur un élément tel que décrit en figure 1 sans nécessiter de modifications de l'élément (1).

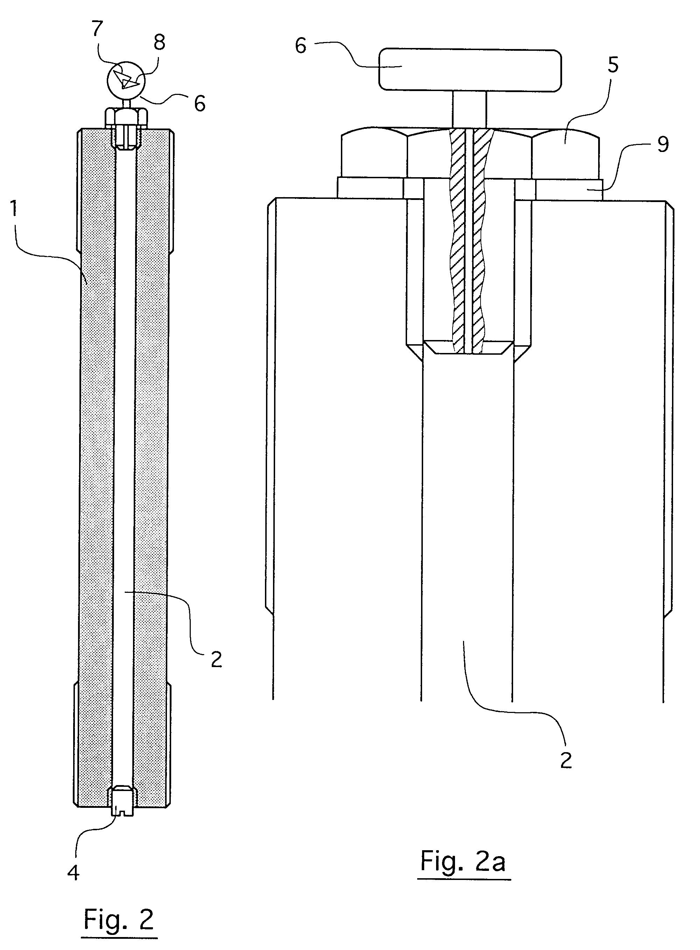

Comme indiqué en figure 2 et figure 2a, pour équiper cet élément d'un dispositif selon l'invention, il suffit de placer:
- à l'une des extrémités un bouchon (4) vissé ou maté dans le pas de vis intérieur (3) de la pièce (1).
- à l'intérieur de la cavité délimitée par le perçage cylindrique axial (2) et par le bouchon (4) un volume de fluide incompressible suffisant pour remplir quasi-totalement cette cavité.
- à l'autre extrémité de l'élément (1) un deuxième bouchon fileté (5) traversé longitudinalement par un perçage débouchant sur les moyens (6) permettant de mesurer les variations de pression auxquelles est soumis le fluide remplissant la cavité. La mise en place de ce deuxième bouchon s'effectue par vissage dans le filetage (3) ; ce vissage provoque l'écrasement d'une rondelle (9) puis la compression du liquide contenu dans la cavité. On choisira la quantité de liquide et le serrage initial du bouchon (5) de telle façon que l'on obtienne une pression initiale déterminée, par exemple 10 bars.

Par la suite, on mettra l'élément (1) équipé des accessoires décrits ci-dessus en place et l'on serrera les écrous, ce qui conférera à l'élément (1) un certain allongement. Le volume de la cavité augmentera légèrement, ce qui provoquera une sensible diminution de la pression lue sur l'indicateur (6): par exemple une baisse de l'aiguille (8) de 10 bars à 8 bars. Il suffira d'étalonner l'échelle de mesure de l'indicateur (6) en fonction des allongements correspondant aux pressions pour disposer d'une surveillance précise et fiable de l'élément de fixation. Sur cette échelle, on repérera de façon spécifique la zone acceptable (par exemple de 8 à 7 bars) correspondant à un allongement correct de l'élément (1).

En plus de sa fonction de mesure de la pression, l'indicateur (6) comportera avantageusement une fonction de mesure et d'affichage (7) de la température du fluide contenu dans la cavité. Il est en effet particulièrement important de tenir compte des dilatations thermiques auxquelles peuvent être soumis l'élément (1) et/ou le fluide pour corriger les informations relatives à la pression donc à l'allongement réel de l'élément de fixation. L'indicateur à aiguilles (7 et 8) illustré sur la figure 2 sera avantageusement remplacé par des capteurs de température et/ou de pression moins encombrant et plus précis. Ces capteurs pourront comporter une alimentation par pile ou batteries et seront avantageusement munis de dispositif permettant de déclencher une alarme à partir du moment où les valeurs lues s'écarteront des valeurs acceptables.

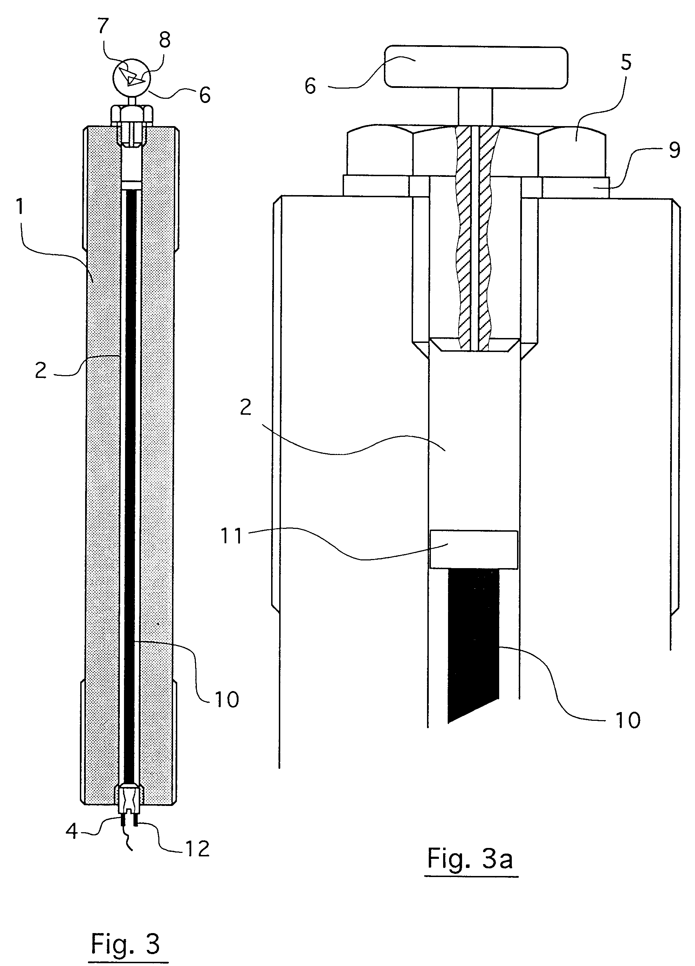

Les figure 3 et figure 3a présentent un mode de réalisation identique à celui illustré précédemment, à ceci près que l'on a placé une tige (10) occupant partiellement et donc diminuant le volume libre de la cavité. Cette tige (10) sera fixée au bouchon (4); elle pourra être guidée à son extrémité libre par anneau (11) de diamètre proche du diamètre intérieur du perçage (2), sans qu'il soit nécessaire de réaliser une étanchéité au niveau de cet anneau (11).

De façon préférentielle, la tige (10) sera constituée par une résistance électrique, laquelle résistance sera alimentée à travers un connecteur (12) ménagé dans le bouchon (4). Les valeurs de pression et/ou de température mesurées par l'indicateur (6) et/ou l'indicateur (7) pourront être utilisées pour asservir l'alimentation de la résistance.

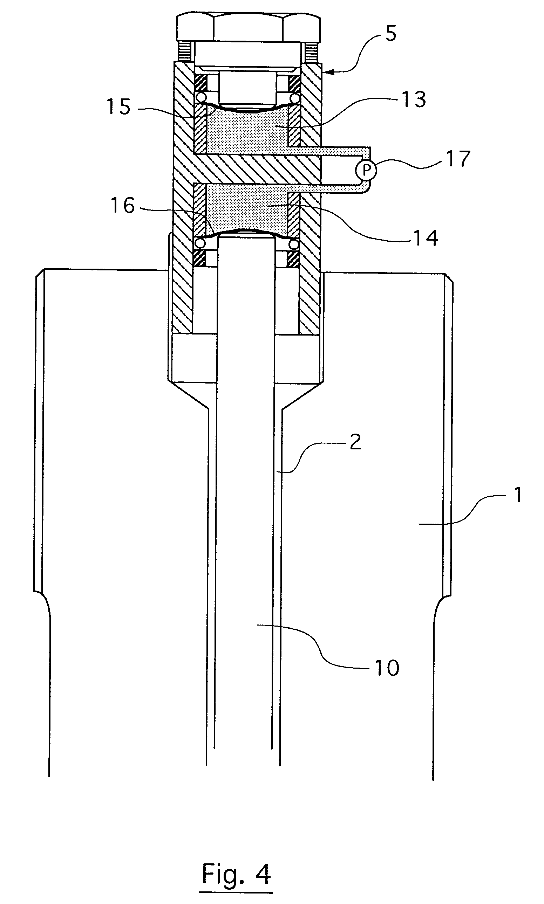

En référence, à la figure 4, le mode de réalisation représenté intègre des moyens de prise en compte de la température du fluide lors de la mesure de la pression, constitués non plus par des moyens de mesure de la température du fluide incompressible mais par des moyens permettant d'annuler les effets de cette température.

Plus précisément, le bouchon 5 présente deux cavités distinctes 13 et 14 remplies du même volume de fluide incompressible. La cavité 13 est étanchéifiée dans sa partie supérieure par une membrane 15 et ne communique pas avec l'alésage 2 de l'élément 1. Son volume ne varie donc pas. La cavité 14 est quant à elle limitée dans sa partie inférieure par une membrane 16 reposant sur la tige 10. Tout mouvement de la tige 10 représentatif de la variation d'allongement de l'élement 1 entraine donc une diminution du volume de la cavité 14.

Un manomètre différentiel 17 en liaison avec les deux cavités 13 et 14 est prévu pour mesurer le différentiel de pression entre celles-ci. Ce manomètre permet d'obtenir une information de pression différentielle traduisant fidèlement l'allongement de l'élément 1 et ne dépendant avantageusement pas de la température du fluide incompressible.

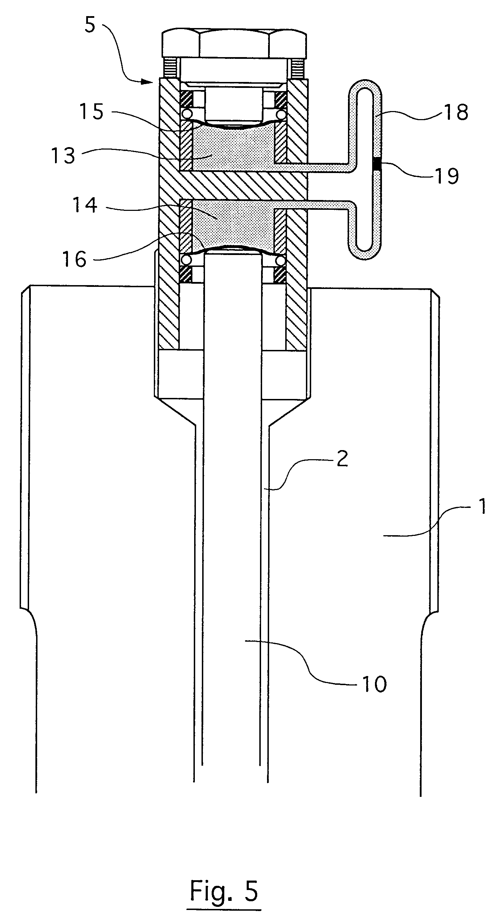

Le mode de réalisation représenté à la figure 5 est identique à celui représenté à la figure 4, sauf en ce que les moyens de mesure des variations de pression sont constitués par un tube 18 relié à ses extrémités aux chambres 13 et 14 et muni d'une bille 19 dont le mouvement traduit les variations de pression dans la chambre 14.

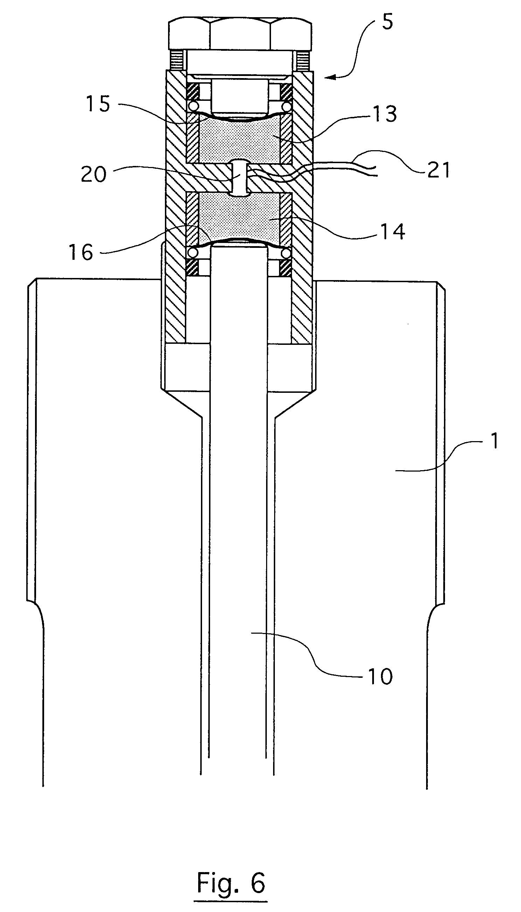

Le mode de réalisation représenté à la figure 6 est quant à lui identique à ceux représentés aux figures 4 et 5 , sauf en ce que les moyens de mesure des variations de pression sont constitués par un capteur différentiel de pression 20 dont les informations peuvent être transmises par des fils électriques 21.

Les modes de réalisation décrits ci-dessus sont donnés à titre indicatif et ne sont en aucune façon limitatifs. On pourra choisir d'autres modes de réalisation de la cavité remplie d'un fluide incompressible sans pour autant sortir du cadre de la présente invention.

## Revendications

1. Elément de fixation fileté (1) du type comportant un perçage cylindrique axial (2) de diamètre faible par rapport au diamètre extérieur du dit élément (1), caractérisé en ce qu'il comporte:
- une cavité intégralement remplie par un fluide incompressible dont l'une au moins des dimensions varie en fonction de l'allongement dudit élément (1) ;
- des moyens (6) de mesure des variations de pression auxquelles est soumis le fluide remplissant la cavité, le dit fluide étant choisi parmi ceux dont les caractéristiques physiques sont telles qu'ils restent à l'état liquide sur une plage supérieure à l'ensemble des couples (température, pression) auxquels ils sont soumis ;
- des moyens de prise en compte de la température dudit fluide.

2. Elément de fixation selon la revendication 1, caractérisé en ce que lesdits moyens de prise en compte de la température sont constitués par des moyens (7) de mesure de la température du fluide remplissant ladite cavité.

3. Elément de fixation selon l'une des revendications 1 ou 2, caractérisé en ce que lesdits moyens (6) de mesure des variations de pression comportent un élément sensible piézo-résistif greffé sur un cristal .

4. Elément de fixation selon l'une des revendications 1 ou 2, caractérisé en ce que lesdits moyens (6) de mesure des variations de pression comportent un élément sensible piézo-résistif greffé sur une membrane céramique.

5. Elément de fixation selon la revendication 1 caractérisé en ce que les moyens de prise en compte de la température dudit fluide sont constitués par une deuxième cavité (13) dont les dimensions ne varient pas, lesdits moyens de mesure des variations de pression permettant la mesure du différentiel de pression entre les deux cavités (13,14).

6. Elément de fixation selon la revendication 5 caractérisé en ce que lesdits moyens (6) de mesure des variations de pression sont constitués par un manomètre différentiel (17).

7. Elément de fixation selon la revendication 5 caratérisé en ce que lesdits moyens (6) de mesure des variations de pression comportent un capteur de pression différentielle (20) disposé entre lesdites deux cavités.

8. Elément de fixation selon la revendication 5 caractérisé en ce que lesdits moyens de (6) de mesure des variations de pression comportent un tube externe (18) communiquant avec les deux cavités (13,14) renfermant une bille (19) susceptible de se déplacer en fonction des variations de pression dudit fluide.

9. Elément de fixation selon l'une des revendications 1 à 8 caractérisé en ce que ladite cavité est au moins partiellement délimitée par ledit perçage cylindrique (2) dudit élément (1).

10. Elément selon l'une des revendications 1 à 9, caractérisé en ce que lesdits moyens (6) de mesure des variations de pression sont munis de dispositifs permettant de déclencher une alarme lorsque les valeurs des pressions mesurées s'écartent de seuils prédéterminés.

11. Elément selon l'une quelconque des revendications 1 à 10, caractérisé en ce que le volume intérieur délimité par ledit perçage (2) est partiellement occupé par une tige cylindrique (10).

12. Elément selon la revendication 11, caractérisé en ce que ladite tige (10) est constituée par une résistance électrique.

13. Elément de fixation selon la revendication 11, caractérisé en ce que ladite tige (10) est constituée par un doigt de gant permettant de loger une résistance électrique.

14. Elément de fixation selon la revendication 12 ou 13, caractérisé en ce que ladite résistance est asservie aux valeurs de pression et/ou de température mesurées par les moyens (6) de mesure de la pression et/ou les moyens (7) de mesure de la température.

15. Elément de fixation selon l'une des revendications 1 à 14, caractérisé en ce que ledit fluide est un liquide pouvant être utilisé dans les circuits de freinage de véhicules.
